# DEMANDE DE BREVET EUROPEEN

(11) **EP 4 773 466 A1**
(43) Date de publication de la demande: **08.07.2026**
(21) Numéro de dépôt: 26150316.3
(22) Date de dépôt: 06.01.2026
(51) Int. Cl.: H02J 7/35, H02S 40/30, H02S 40/34, H02S 40/38, H02G 3/08, H02G 3/10, E06B 9/68

(54) **DISPOSITIF DE COMMANDE MANUELLE ALIMENTÉ PAR UN MODULE PHOTOVOLTAÏQUE INTEGRÉ A FABRICATION SIMPLIFIÉE**

(30) Priorité: 07.01.2025 FR 2500123
(71) Demandeur: Somfy Activites SA, 74300 Cluses (FR)
(72) Inventeur: SOURIVONG, Justin, 74300 CLUSES (FR); ROUSSEAU, Fabien, 74300 CLUSES (FR); D'URSO, Nicolas, 74300 CLUSES (FR); DESAGRE, Thomas, 74300 CLUSES (FR)
(74) Mandataire: Bugnion Genève

(57) **Abrégé**

Dispositif de commande manuelle (10) comprenant : un socle (11), un bouton de commande (6) monté sur le socle (11) et permettant l'application manuelle d'un effort d'appui par l'utilisateur du dispositif de commande manuelle (10) pour provoquer l'émission d'un ordre de commande, le dispositif de commande manuelle (10) comprenant également une unité électronique (4) comprenant un transmetteur d'ordres de commande et une réserve d'énergie (20), le dispositif de commande manuelle (10) comprenant une zone centrale (12) circulaire délimitée au moins en partie par le bouton de commande (6), caractérisé en ce qu'il comprend un module photovoltaïque (30) alimentant la réserve d'énergie (20) et une plateforme (50) du module photovoltaïque (30), montée sur le socle (11), la plateforme comprenant une surface de support (51) délimitée par un rebord (52) périphérique comprenant une surépaisseur (53) locale , le module photovoltaïque (30) présentant une forme sensiblement circulaire, le module photovoltaïque (30) étant logé sur la surface de support (51) de la plateforme (50) et à l'intérieur du rebord (52) périphérique et maintenu en rotation par la surépaisseur (53) locale du rebord (52) périphérique.

## Description

### DOMAINE TECHNIQUE ET ART ANTÉRIEUR

La présente invention concerne un dispositif de commande manuelle domotique destiné à la commande distante par radiofréquences d'un ou plusieurs récepteurs commandant une ou plusieurs charges électriques dans un bâtiment, cette ou ces charges électriques étant destinées au confort thermique, visuel ou lumineux, à la protection solaire, à la fermeture ou à la sécurité du bâtiment ou de ses abords.

Un tel dispositif de commande manuelle est par exemple de type fixe, sous la forme d'un point de commande mural, ou mobile, par exemple une télécommande. Le dispositif de commande manuelle est alimenté de manière autonome, par une batterie, elle-même rechargée par un module photovoltaïque.

Le dispositif de commande manuelle peut transmettre des ordres d'un utilisateur et/ou peut comprendre un capteur pour transmettre des données issues de ce capteur, utilisées par le ou les récepteurs commandant la ou les charges électriques. Le dispositif de commande manuelle peut également être récepteur de données, c'est-à-dire combiner l'émission et la réception.

Il est connu d'utiliser des dispositifs de commande manuelle autonomes en énergie. Par exemple, la demande de brevet FR2948488 décrit un dispositif de commande manuelle radio incluant un module photovoltaïque sur une majeure partie de la surface d'une touche de commande. La surface du module photovoltaïque est ainsi maximisée. Une telle disposition permet d'obtenir une surface photovoltaïque importante.

La demande de brevet FR3126138 décrit par ailleurs un dispositif de commande manuelle présentant une forme extérieure circulaire. La zone d'appui périphérique comprend une ou plusieurs zones d'appui, sur lesquelles un utilisateur peut exercer une pression pour provoquer l'émission d'un ordre de commande. L'effort de rappel nécessaire pour cette ou ces zones d'appui est réalisé grâce à un élément torique.

Ce dispositif de commande manuelle répond aux critères esthétiques requis par le marché, à savoir des formes douces et arrondies, tout en offrant les mêmes fonctionnalités de commande que les dispositifs de commande de l'état de l'art. En particulier, une zone centrale de ce dispositif de commande sert également de zone d'appui et permet d'activer un interrupteur et donc l'émission d'un ordre de commande supplémentaire.

L'adaptation d'une alimentation par un dispositif de stockage d'énergie rechargeable par un module photovoltaïque d'un tel dispositif de commande manuelle n'est pas triviale. En particulier, outre l'approvisionnement en énergie par un module photovoltaïque, il faut pouvoir conserver les fonctionnalités existantes des dispositifs de commande.

Le but de l'invention est de fournir un dispositif de commande manuelle remédiant aux inconvénients précités et améliorant le dispositif de commande manuelle connus de l'art antérieur. En particulier, l'invention permet la réalisation d'un dispositif de commande manuelle autonome en énergie, répondant aux contraintes esthétiques, susceptible d'une réalisation industrielle simple et conservant les fonctionnalités existantes des dispositifs de commande.

### EXPOSÉ DE L'INVENTION

L'invention concerne pour cela un dispositif de commande manuelle comprenant : un socle, un bouton de commande monté sur le socle et permettant l'application manuelle d'un effort d'appui par l'utilisateur du dispositif de commande manuelle pour provoquer l'émission d'un ordre de commande, le dispositif de commande manuelle comprenant également une unité électronique comprenant un transmetteur d'ordres de commande et une réserve d'énergie, le dispositif de commande manuelle comprenant une zone centrale circulaire délimitée au moins en partie par le bouton de commande. Le dispositif de commande manuelle comprend également un module photovoltaïque alimentant la réserve d'énergie et une plateforme du module photovoltaïque, montée sur le socle, la plateforme comprenant une surface de support délimitée par un rebord périphérique comprenant une surépaisseur locale, le module photovoltaïque présentant une forme sensiblement circulaire, le module photovoltaïque étant logé sur la surface de support de la plateforme et à l'intérieur du rebord périphérique et maintenu en rotation par la surépaisseur locale du rebord périphérique.

Ainsi, pour un dispositif de commande manuelle comprenant une zone centrale circulaire délimitée par le bouton de commande, le module photovoltaïque multicouches recouvre la zone centrale à l'exception d'une zone interne et est logé et maintenu sur le dispositif de commande manuelle.

On s'assure ainsi de pouvoir caler et indexer le module photovoltaïque par rapport au socle et au bouton de commande dans la zone centrale. Ainsi, la surface photosensible peut être optimisée tout en permettant une installation correcte du module photovoltaïque.

Ainsi, la plateforme permet un positionnement aisé du module photovoltaïque dans un logement de réception adapté.

En d'autres termes, on prévoit des moyens imposant une orientation du module photovoltaïque par rapport à l'unité électronique du dispositif de commande de sorte à assurer la connexion électrique entre le module photovoltaïque et l'unité électronique lors de l'assemblage du module photovoltaïque sur le dispositif de commande, ces moyens formant avantageusement une zone pour loger une interface homme-machine.

Dans un exemple préféré, le dispositif de commande manuelle comprend une interface homme-machine positionnée au niveau de la surépaisseur locale du rebord périphérique.

Selon ce mode de réalisation, la zone interne est plus importante et permet plus facilement d'agencer dans l'espace de la zone interne d'autres éléments fonctionnels du dispositif de commande manuelle, tels qu'une interface homme-machine ou une antenne. Ainsi, on optimise la répartition d'une part de la surface active du module photovoltaïque et d'autre part des éléments fonctionnels qui ne peuvent être masqués par la surface active du module photovoltaïque.

Par exemple, l'interface homme-machine comprend une diode électroluminescente et un guide de lumière dont une entrée est positionnée en vis-à-vis de la diode électroluminescente et dont une sortie est, en configuration assemblée du dispositif de commande manuelle, agencées en vis-à-vis de surépaisseur locale, en particulier agencée en vis-à-vis d'une lumière prévue dans la surépaisseur locale.

Ainsi, les moyens permettant de loger et indexer angulairement le module photovoltaïque dans le dispositif de commande sont avantageusement exploités pour permettre un retour d'information vers un utilisateur par le biais de la diode électroluminescente et du guide de lumière.

Selon une caractéristique additionnelle, l'interface homme-machine comprend un interrupteur bistable ou un bouton poussoir ou un capteur, en particulier agencé en vis-à-vis d'un évidement prévu dans la surépaisseur locale.

Ainsi, les moyens permettant de loger et indexer angulairement le module photovoltaïque dans le dispositif de commande sont avantageusement exploités pour permettre à un utilisateur d'agir sur le dispositif de commande par le biais de l'interrupteur bistable, notamment de configurer un état mécanique parmi deux états mécaniques possibles de l'interrupteur, correspondant à un état fonctionnel parmi deux états fonctionnels possibles du dispositif de commande.

Le dispositif de commande manuelle peut comprendre une antenne disposée au moins en partie en vis-à-vis de la surépaisseur locale.

Ainsi, les moyens permettant de loger et indexer angulairement le module photovoltaïque dans le dispositif de commande sont avantageusement exploités pour permettre un rayonnement d'une antenne, placée en vis-à-vis de la surépaisseur locale, qui ne soit pas perturbé par la présence de la cellule photovoltaïque.

Selon une autre caractéristique additionnelle, le circuit électronique comprend un circuit imprimé positionné sur le socle et sous la plateforme et le circuit imprimé supporte au moins une diode électroluminescente, un guide de lumière, un interrupteur ou une antenne, en vis-à-vis de la surépaisseur locale en configuration assemblée du dispositif de commande manuelle.

Ainsi, le circuit imprimé de l'unité électronique est disposé de manière fixe sur le socle, ce qui permet de faire correspondre les positions des éléments fonctionnels montés sur le circuit imprimé avec la zone interne.

Selon une autre caractéristique additionnelle, la forme de la surépaisseur locale s'inscrit dans un segment ou secteur circulaire de la zone centrale.

La surépaisseur locale s'étend ainsi par rapport à la zone centrale, ce qui permet de conserver une surface intérieure de forme sensiblement circulaire et de maximiser ainsi la surface de la cellule active.

Dans un exemple de réalisation, le module photovoltaïque a une forme principale de disque et présente une superposition de couches laminées comprenant au moins une couche avant, une couche intermédiaire intégrant au moins une cellule photovoltaïque active et une couche arrière disposant de liaisons électriques adaptées au raccordement du module photovoltaïque à l'unité électronique du dispositif de commande manuelle, au moins les couches avant et arrière étant reliées l'une à l'autre, le module photovoltaïque présentant une troncature s'inscrivant dans un segment ou secteur circulaire de la forme de disque.

La technologie utilisée pour la fabrication des cellules solaires actives permet de facilement produire un panneau solaire sensiblement circulaire, avec un bon potentiel de production d'énergie électrique sous faible éclairement.

La mise en place d'une troncature sert d'élément d'indexation du module photovoltaïque par rapport à la plateforme.

La couche avant et la couche arrière du module photovoltaïque sont par exemple des films en matériau plastique, encapsulant la couche intermédiaire intégrant les cellules photovoltaïques actives et assurant l'étanchéité de ces cellules photovoltaïques actives.

Le module photovoltaïque ainsi formé permet une conception plus aisée, les couches avant et arrières servant de couches de protection de la ou des cellules solaires et une zone de protection du dispositif de commande manuelle.

De préférence, la troncature et la surépaisseur locale ont des formes complémentaires et sont en vis-à-vis dans une configuration assemblée du dispositif de commande manuelle.

Ainsi, l'élément d'indexation du module photovoltaïque permet l'assemblage du module photovoltaïque sur la zone centrale du dispositif de commande manuelle dans une orientation prédéterminée. Un tel module photovoltaïque comprend ainsi des éléments qui contraignent son orientation. La position de ces éléments est définie par rapport à la zone interne de la zone centrale. Leur position est ainsi également définie par rapport au circuit électronique et au bouton de commande.

Dans un exemple avantageux, le dispositif de commande manuelle comporte un interrupteur sous la plateforme et la surface de support de la plateforme, ainsi que le module photovoltaïque sont déformables élastiquement de sorte à permettre l'actionnement de l'interrupteur à travers le module photovoltaïque

En variante, le dispositif de commande manuelle comporte un interrupteur sous la plateforme, la surface du support comporte une fenêtre au droit dudit interrupteur et le module photovoltaïque est déformable élastiquement de sorte à permettre l'actionnement de l'interrupteur à travers le module photovoltaïque.

La nature déformable de la plateforme et du module photovoltaïque, y compris lorsque ceux-ci sont empilés permettent à un utilisateur d'agir par contact sur le module photovoltaïque sur un interrupteur situé en deçà de la plateforme. Ainsi le dispositif de commande conserve les fonctionnalités dont il dispose dans une version non rechargeable.

Selon une caractéristique additionnelle, la plateforme comprend une ouverture faisant face aux liaisons électriques du module photovoltaïque.

La plateforme permet ainsi le positionnement du module photovoltaïque dans la zone centrale et le cheminement des liaisons électriques depuis le module photovoltaïque vers l'unité électronique et/ou la réserve d'énergie.

Ainsi, il est simple et aisé de prévoir un dispositif de commande manuelle, maximisant la surface de cellules solaires tout en facilitant l'orientation angulaire et l'assemblage du module photovoltaïque par rapport au bouton de commande délimitant la zone centrale.

De préférence, le rebord périphérique et la surépaisseur locale ont une hauteur sensiblement égale à l'épaisseur du module photovoltaïque.

Ainsi, l'impression d'ensemble du dispositif reste uniforme, sans rupture sur la surface correspondant à la zone centrale.

Selon une caractéristique additionnelle, le rebord périphérique comprend une deuxième surépaisseur, située à l'opposé de la surépaisseur locale, la surépaisseur locale et la deuxième surépaisseur locale étant disposées symétriquement par rapport au centre du dispositif manuel de commande.

Ainsi, le positionnement du module photovoltaïque dans une orientation particulière est facilité.

Selon une autre caractéristique additionnelle, le dispositif de commande comporte un interrupteur bistable actionnable par déformation du module photovoltaïque.

### DESCRIPTION DES FIGURES

L'invention sera mieux comprise à la lecture de la description qui va suivre, donnée uniquement à titre d'exemple et faite en se référant aux dessins annexés sur lesquels :
- La figure 1 est une représentation schématique d'une vue de face d'un premier mode de réalisation d'un dispositif de commande manuelle selon l'invention.
- La figure 2 est une vue éclatée représentée schématiquement d'un exemple de réalisation d'un module photovoltaïque adapté au dispositif de commande manuelle du premier mode de réalisation.
- La figure 3 est une vue en coupe représentée schématiquement du dispositif de commande de la figure 1 le long du plan A1.
- La figure 4 est une vue en perspective d'une plateforme 50 du dispositif de commande manuelle de la figure 1.
- La figure 5 est une représentation schématique d'une vue de face d'un exemple de réalisation d'un dispositif de commande manuelle dans le premier mode de réalisation.
- La figure 6 est une représentation schématique d'une vue de face d'un deuxième mode de réalisation du dispositif de commande manuelle selon l'invention.
- La figure 7 est une vue schématique d'un premier exemple de réalisation d'un module photovoltaïque adapté au deuxième mode de réalisation.
- La figure 8 est une vue schématique d'un deuxième exemple de réalisation d'un module photovoltaïque adapté au deuxième mode de réalisation.
- La figure 9 est une représentation schématique d'une vue de face d'une variante du deuxième mode de réalisation.

### DESCRIPTION DETAILLÉE DE L'INVENTION

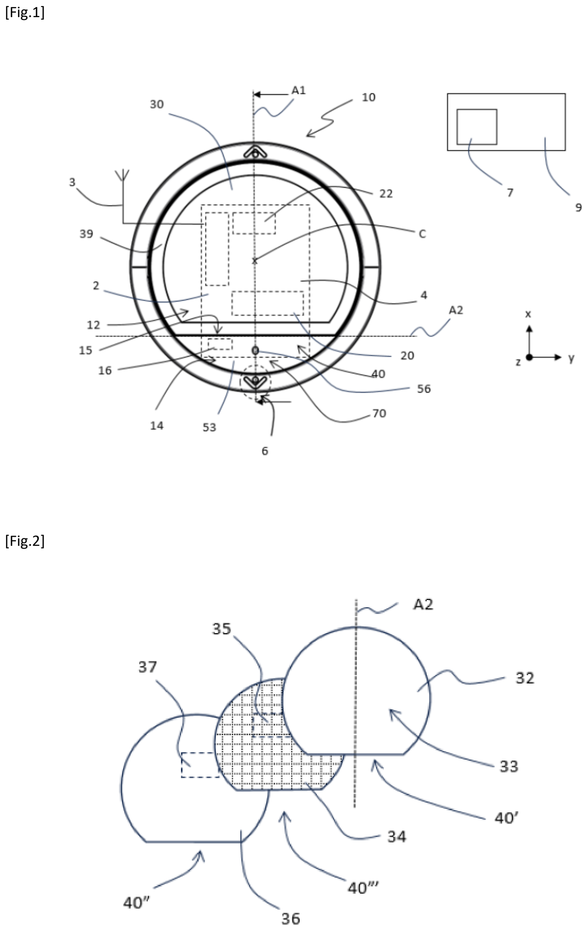

L'invention est relative à un dispositif de commande manuelle 10, dont des modes et exemples de réalisation sont notamment visibles en figures 1 à 9.

La figure 1 représente un mode de réalisation d'un dispositif de commande manuelle 10 utilisant l'invention. Ce dispositif de commande manuelle 10 domotique autonome comprend une unité électronique 4 incluant une unité radiofréquences 2 (par exemple de type émetteur et/ou de type récepteur) raccordée à une antenne 3. L'unité radiofréquence permet au dispositif de commande manuelle 10 de communiquer, par radiofréquences, avec au moins un récepteur 7 associé à une ou plusieurs charges électriques commandables 9 dans un bâtiment, cette ou ces charges électriques 9 étant destinées au confort thermique, visuel ou lumineux, à la protection solaire, à la fermeture ou à la sécurité du bâtiment ou de ses abords.

Dans l'exemple suivant, le dispositif de commande manuelle 10 se présente sous la forme d'un point de commande mural, commandant un volet roulant ou un écran de protection solaire. Alternativement, le dispositif de commande manuelle 10 est apte à être tenu par la main d'un utilisateur ou posé sur un meuble.

Pour des raisons esthétiques et de cohérence de gamme, le dispositif de commande manuelle 10 présente une forme extérieure globalement circulaire. Il peut être entouré par un plastron (non représenté) dont la forme extérieure est indépendante de la forme extérieure du dispositif de commande manuelle

Le dispositif de commande comporte un boîtier de forme circulaire comprenant un fond ou socle 11 supportant une interface active 18. Dans le cas d'un dispositif fixé au mur, le socle 11 est configuré pour permettre cette fixation.

L'unité électronique 4 du dispositif de commande manuelle 10 comprend également une unité de commande (non représentée), par exemple un microcontrôleur, raccordée à l'unité radiofréquence 2. Dans le cas d'un dispositif de commande manuelle 10 de type émetteur, les données transmises par l'unité de commande sont transformées en signaux radioélectriques par l'unité radiofréquence 2 pour être appliquées à l'antenne 3.

Le dispositif de commande manuelle 10 comprend également un bouton de commande 6, associé à un ou plusieurs interrupteurs 24, 24' de l'unité électronique 4. Ainsi, des ordres provoqués manuellement par un utilisateur en agissant sur le bouton de commande 6 et donc sur au moins un des interrupteurs 24, 24', sont générés et transmis depuis le dispositif de commande manuelle 10 vers les charges électriques 9 à commander.

Le bouton de commande 6 délimite une zone centrale 12 circulaire du dispositif de commande 10, qui peut être associée à un autre interrupteur 28 pour une autre fonction de commande que celle ou celles prévues par le bouton de commande 6.

L'interface active 18 comporte notamment l'unité électronique 4, le bouton de commande 6 en périphérie et, sur sa face extérieure, un module photovoltaïque 30 dans la zone centrale 12. L'interrupteur 28 est positionné sous le module photovoltaïque 30.

Le dispositif de commande manuelle 10 est alimenté par une réserve d'énergie 20, elle-même connectée pour sa recharge au module photovoltaïque 30. La réserve d'énergie 20 peut être un condensateur de stockage ou un accumulateur. Eventuellement, l'unité électronique 4 comprend un circuit adaptateur de tension, celui-ci permettant une charge optimale de la réserve d'énergie 20 en fonction de l'éclairement auquel est soumis le module photovoltaïque 30. L'unité électronique 4 se présente sous la forme d'un circuit imprimé positionné sur le socle 11.

L'unité électronique 4 peut également comprendre au moins un capteur 16, par exemple un capteur de température ou d'humidité.

L'unité électronique 4 comprend également une zone de connexion apte à assurer la connexion électrique avec le module photovoltaïque 30.

Pour optimiser le rendement, on cherche à maximiser la taille du module photovoltaïque 30. Celui-ci se présente sous la forme d'un module photovoltaïque et est monté sur le dispositif de commande manuelle 10. La zone centrale 12 circulaire du dispositif de commande manuelle 10 délimitée par le bouton de commande 6 est particulièrement adaptée à être recouverte par le module photovoltaïque 30.

Par la suite, les termes modules de cellules solaire et module photovoltaïque sont utilisés indifféremment.

Certaines technologies photovoltaïques et procédés de fabrication permettent aujourd'hui de développer des cellules photovoltaïques flexibles et de formes variées, dont des formes circulaires. C'est notamment le cas du procédé mis en œuvre avec la technologie de cellules solaires à pigment photosensible (en langue anglaise DSSc ou Dye-Sensitized Solar cell).

De telles cellules sont par exemple décrites dans les documents US5084365, WO2020141252 ou WO2023094288A1.

Les cellules à pigment photosensible permettent d'adapter la forme du module photovoltaïque 30 aux contraintes de la zone centrale 12. Elles présentent aussi l'avantage de pouvoir produire de l'énergie même sans ensoleillement direct ou sous un faible éclairage. Ceci est particulièrement intéressant pour l'alimentation de dispositifs installés dans un bâtiment, rarement soumis à un éclairage naturel direct. Ainsi, bien que n'étant pas les plus performantes du marché, ces cellules présentent des avantages indéniables dans l'application concernée par l'invention.

Un module photovoltaïque 30 pouvant alimenter la réserve d'énergie 20 est ainsi formé d'un module photovoltaïque 30 sensiblement circulaire. Celui-ci est notamment basé sur cette technologie de cellules solaires à pigment photosensible.

Le module photovoltaïque 30 ainsi produit est notamment composé d'un ensemble de couches individuelles, comprenant, par exemple, au moins:
- une couche avant 32 de protection,
- une ou plusieurs couches intermédiaires 34 intégrant une ou plusieurs cellules photovoltaïques actives et des électrodes 35,
- une couche arrière 36 de protection, disposant également de liaisons électriques 37, par exemple des pastilles adaptées au raccordement des électrodes 35 au circuit électronique du dispositif de commande manuelle 10.

La couche avant 32 et la couche arrière 36 sont scellées l'une à l'autre le long d'un bord d'étanchéité 39 sur leurs bords périphériques, sur le pourtour extérieur de la ou des couches intermédiaires, de sorte à encapsuler la ou les couches intermédiaires et à étanchéifier le module photovoltaïque 30.

Au moins une couche intermédiaire comprend des électrodes, en contact avec la ou les cellules actives, et qui sont également mises en contact lors de l'assemblage des différentes couches entre elles, avec des liaisons électriques 37 de la couche arrière 36 de protection. Les liaisons électriques 37 sont ainsi situées à l'arrière du module photovoltaïque et peuvent être reliées, par exemple avec une nappe libre pour assurer la connexion électrique avec l'unité électronique 4. Notamment, les liaisons électriques 37 sont sous la forme de pastilles rigides, traversant t la couche arrière de connexion pour être mises en contact avec les électrodes.

Alternativement, les liaisons électriques 37 sont en contact direct avec l'unité électronique 4.

Pendant le montage du module photovoltaïque 30 sur le dispositif de commande manuelle 10, il est nécessaire d'aligner la position des liaisons électriques 37 de la couche arrière 36 avec des zones de connexion du circuit électronique du dispositif de commande. Or, dans le cas d'un module photovoltaïque 30 et celle de la zone centrale 12 du dispositif de commande qui le reçoit de formes sensiblement circulaires, cet alignement peut être complexe.

Grâce à l'invention, cet alignement peut être obtenu de manière simple et rapide.

En particulier, selon un premier exemple de réalisation visible aux figures 1 et 2, une zone interne 14 est matérialisée par un segment circulaire de la zone centrale 12, autrement dit, la zone centrale 12 est divisée en une zone centrale tronquée, par exemple le long d'un segment ou corde de cercle 15, et en la zone interne 14. Cette division ou méplat est avantageusement perpendiculaire à l'axe A1 , qui forme un axe de symétrie pour le bouton de commande 6, ou du moins symétriquement par rapport à l'axe A1.

Ainsi, selon un mode de réalisation, lors de la fabrication, au moins chacune des couches avant et arrière du module photovoltaïque 30 et éventuellement une ou plusieurs couches intermédiaires sont prévues sous forme de disque tronqué correspondant à la forme de la zone centrale 12, muni d'une troncature initiale 40', 40", qui s'inscrit dans un segment ou un secteur circulaire de ce disque. Une orientation principale est définie sur un axe A2.

Lors de l'assemblage des couches, celles-ci sont alignées les unes par rapport aux autres pour former une troncature 40 du module photovoltaïque 30. Cette troncature 40 permet, lors de la mise en place du module photovoltaïque dans la zone centrale, d'indexer le module photovoltaïque 30 par rapport à la zone interne 14 du dispositif de commande manuelle 10, plus particulièrement d'aligner la position des liaisons électriques 37 de la couche arrière 36 avec des zones de connexion du circuit électronique du dispositif de commande.

Le module est avantageusement fixé à la plateforme par des moyens adhésifs, par exemple au moyen de colle ou au moyen d'un adhésif double face.

Dans ce mode de réalisation, la forme extérieure du module photovoltaïque 30 est globalement circulaire à l'exception d'un segment droit, c'est-à-dire que le module photovoltaïque 30 a un pourtour circulaire fermé par un segment droit. Ainsi, la troncature 40 du module photovoltaïque 30 est réalisée par retrait d'un segment circulaire par rapport à un disque, ayant un périmètre dans lequel s'inscrit le module photovoltaïque 30.

Ce mode de réalisation est simple, il permet une indexation entre le module photovoltaïque 30 et la zone centrale 12 par coopération suivant l'axe A2, celui-ci étant perpendiculaire au segment droit. Le positionnement parallèle du méplat de la zone centrale 12 et du segment droit du module photovoltaïque 30 permet l'orientation du module photovoltaïque 30 dans la zone centrale 12, par rapport à la zone interne 14.

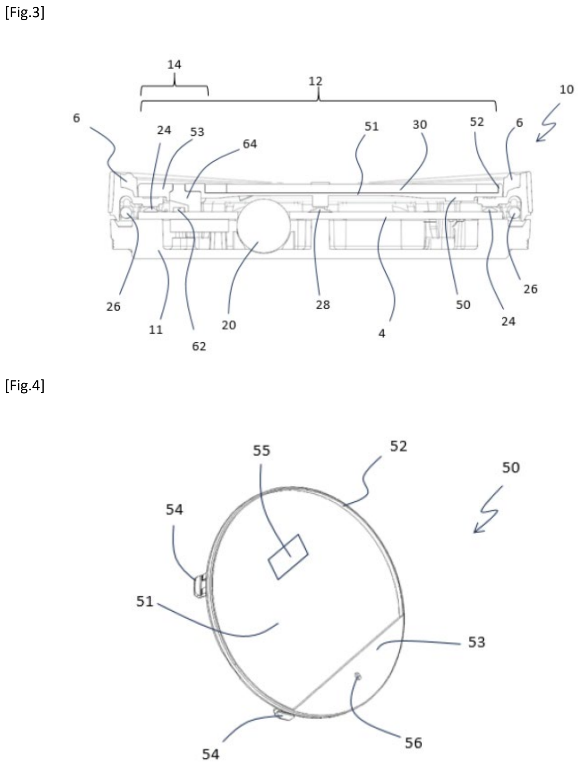

La figure 3 représente en vue en coupe suivant l'axe A1, l'arrangement de la zone centrale 12 et de la zone interne 14 et du module photovoltaïque 30, dans le mode de réalisation de la figure 1. Le bouton de commande 6 dispose d'au moins un degré de liberté par rapport au socle 11, à l'encontre d'un élément de rappel 26 élastique, réalisé sous la forme d'un élément torique sous contrainte dans ce mode de réalisation. Lorsque le bouton de commande 6 est déplacé, par un appui d'un utilisateur, un interrupteur 24, 24' est activé, ce qui provoque l'émission d'un ordre de commande. L'élément de rappel 26 élastique force le retour du bouton de commande 6 dans une position de repos stable. Le circuit imprimé, positionné sur le socle 11, supporte l'interrupteur 54 en vis-à-vis d'une zone d'appui a6 du bouton de commande 6.

Le dispositif de commande manuelle 10 comprend également une plateforme 50 du module photovoltaïque 30, représentée plus en détail à la figure 4. Cette plateforme 50 est montée fixe sur le socle 11, au-dessus de l'unité électronique 4 par exemple à l'aide de pattes de montage 54, dont deux sont représentées. En particulier, les pattes de montage 54 peuvent être clipsées sur le socle 11.

La plateforme 50 comprend une surface de support 51 munie d'un rebord 52 périphérique, formant un contour extérieur du socle 11 et s'élevant par rapport à la surface de support 51, lequel comprend une surépaisseur 53 locale. Autrement dit, le rebord 52 périphérique s'étend sur une partie du contour de la surface de support 51 avec une première épaisseur constante et sur une autre partie du contour avec une deuxième épaisseur plus importante que la première épaisseur. L'épaisseur du rebord est considérée dans la direction radiale.

Le module photovoltaïque 30 est reçu à l'intérieur du rebord 52 et sa troncature 40 coopère avec la surépaisseur 53 locale de la plateforme 50, en configuration assemblée du dispositif de commande manuelle 10.

La plateforme 50 comprend dans sa surface de support 51 un évidement 55, lequel est disposé en configuration assemblée du dispositif de commande manuelle 10, en vis-à-vis de la zone de connexion 22 de l'unité électronique 4, et est disposé par rapport à la surépaisseur 53 de sorte que les liaisons électriques 37 du module photovoltaïque soient alignés avec la zone de connexion 22.

De manière avantageuse et ainsi que représenté sur la figure 3, la surépaisseur 53 locale a une hauteur, perpendiculairement à la surface de support 51, sensiblement égale à la hauteur du rebord 52 périphérique et sa hauteur est sensiblement égale à l'épaisseur du module photovoltaïque 30, de sorte que, lorsque le module photovoltaïque 30 est reçu sur la plateforme 50, il ne dépasse pas de la surépaisseur 53. L'ensemble constitué par le module photovoltaïque 30 et la plateforme 50 présente ainsi une apparence uniforme. Le rebord 52 périphérique et/ou la surépaisseur 53 locale peut être réalisé de matière avec la surface de support 51 de la plateforme 50 ou être formé par une pièce rapportée sur la surface de support 51 de la plateforme 50.

La surépaisseur 53 locale s'étend ainsi dans un plan défini par les axes A1 et A2 (ou les axes x et y d'un repère représenté en figure 1) dans la zone interne 14. Le rebord 52 périphérique permet de caler le module photovoltaïque 30 dans la zone centrale 12 et la surépaisseur 52 locale permet d'orienter et de fixer sa position angulaire dans le dispositif de commande manuelle 10.

Dans l'exemple de module photovoltaïque 30 adapté à ce mode de réalisation, détaillé à la figure 2, chacune des couches avant et arrière du module photovoltaïque 30 est prévue sous forme de disque correspondant à la forme de la zone centrale 12, muni d'une troncature initiale 40', 40" qui s'inscrit dans un segment circulaire de ce disque. La couche intermédiaire 34 s'inscrit également dans un cercle et comprend également une troncature initiale 40‴ qui s'inscrit dans un segment circulaire par rapport à cette forme extérieure circulaire.

Ainsi, le module photovoltaïque 30, tel que représenté assemblé en figure 1, a lui-même une forme de disque tronqué, avec une troncature 40.

Les dimensions de la zone interne 14 permettent ainsi d'agencer dans l'espace de la zone interne 14 d'autres éléments fonctionnels du dispositif de commande manuelle 10. On optimise ainsi l'arrangement du module photovoltaïque et des éléments fonctionnels en face avant du dispositif de commande.

En particulier, une interface homme-machine 70 est positionnée au niveau de la surépaisseur 53 locale du rebord périphérique 52.

Par exemple, l'interface homme-machine 70 peut comprendre au moins un des éléments fonctionnels suivants du dispositif de commande manuelle 10 :
- un dispositif de retour lumineux comprenant au moins une diode électroluminescente 62 et un guide de lumière 64,
- une touche de commande de type bouton poussoir, bouton coulissant ou interrupteur bistable,
- un capteur de paramètres environnementaux (luminosité, QAI (qualité de l'air intérieur),...etc.) qui aurait besoin d'un accès à la face avant.

Tel que représenté à la figure 1, le dispositif de commande manuelle 10 comprend un dispositif de retour lumineux, agencé dans la zone interne 14 du dispositif de commande manuelle 10.

En particulier, ce dispositif de retour lumineux comprend une diode électroluminescente 62, disposée devant une entrée 66 d'un guide lumineux 64.

Une lumière 56 est également formée dans la surépaisseur 53 de la plateforme 50, cette lumière 56 étant en vis-à-vis d'une sortie 66 du guide lumineux. Le guide lumineux peut s'étendre uniquement sous la plateforme ou, tel que représenté en figure 3, être agencé au moins partiellement dans la surépaisseur 53 de la plateforme 50.

Ainsi, l'unité électronique 4, en fonction des besoins de retour d'information vers un utilisateur, peut gérer l'allumage ou l'extinction de la diode électroluminescente 62, le flux lumineux étant alors visible sur la face avant du dispositif de commande manuelle 10, dans la zone interne.

La face avant est ainsi partagée entre une zone en vis-à-vis du module photovoltaïque 30, permettant de capter l'énergie solaire et une zone d'information lumineuse.

De la même manière, un interrupteur bistable ou un bouton poussoir ou un capteur (non représentés) peut être agencé en vis-à-vis d'un évidement prévu dans la surépaisseur 53 locale. L'interrupteur bistable, le bouton poussoir ou le capteur peuvent être arrangés à la place ou en plus du dispositif de retour lumineux. Un capteur peut également par exemple être arrangé en plus d'un interrupteur bistable ou d'un bouton poussoir.

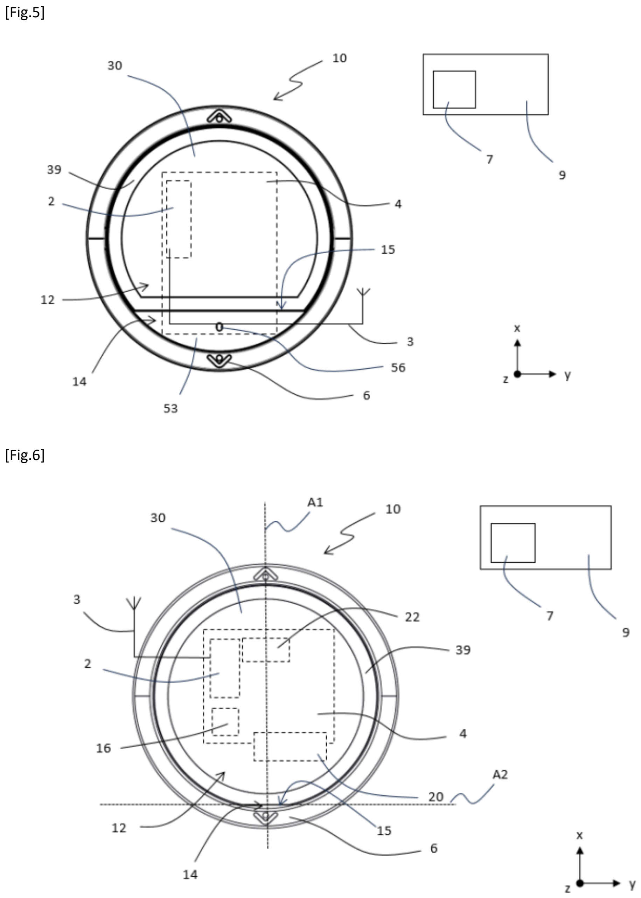

Le mode de réalisation de la figure 5 montre une partie d'antenne 3 radiofréquence cheminant au niveau de la zone interne 14. L'antenne 3 radiofréquence peut ainsi être imprimée ou montée sur le circuit imprimé au niveau de la zone interne 14.

Ce mode de réalisation permet à l'antenne 3 radiofréquence de ne pas être masquée par le module photovoltaïque 30 et donc d'avoir des performances indépendantes des perturbations électromagnétiques pouvant être générées par celui-ci.

Selon un mode de réalisation alternatif, non représenté, au moins une partie de l'antenne 3 radiofréquence peut être arrangée en vis-à-vis de la zone interne 14, tandis qu'une autre partie peut être arrangée en vis-à-vis du bord d'étanchéité 39 du module photovoltaïque 30.

Ce bord d'étanchéité n'étant pas lui-même muni de cellules photovoltaïques actives, son environnement proche est moins perturbé électromagnétiquement.

La dimension de la surface de support 51 de la plateforme 50 perpendiculairement au plan de la surface de support 51 est suffisamment constante et faible pour qu'elle soit élastiquement déformable perpendiculairement à son plan. A sa périphérie, du fait de la présence du rebord 52 périphérique, la plateforme 50 est relativement rigide.

En son centre, correspondant au centre C du dispositif de commande manuelle 10, la plateforme comprend un pion, s'étendant à partir de la face arrière de la plateforme 51 opposée à la surface de support 51. Ce pion permet d'activer l'interrupteur 28 et donc de disposer d'une fonction de commande équivalent à celle des dispositifs de commande manuelle connus dans des versions non rechargeables. Le module photovoltaïque 30 est avantageusement également déformable, ce qui permet à un utilisateur d'activer l'interrupteur 28 au travers de l'ensemble constitué du module photovoltaïque 30 et de la plateforme 50.

En variante, la surface de support de la plateforme comporte une fenêtre au droit de l'interrupteur 28 et le module photovoltaïque est déformable élastiquement de sorte à permettre l'actionnement de l'interrupteur à travers le module photovoltaïque.

Les figures 6 à 9 représentent un deuxième mode de réalisation du dispositif de commande selon l'invention. Les éléments similaires au premier mode de réalisation sont représentés par les mêmes références ou ne sont plus décrits.

Dans cet exemple, la troncature 40 prévue dans le module photovoltaïque 30 et donc la zone interne 14 du dispositif de commande correspondante est de dimensions inférieures à celle du premier mode de réalisation.

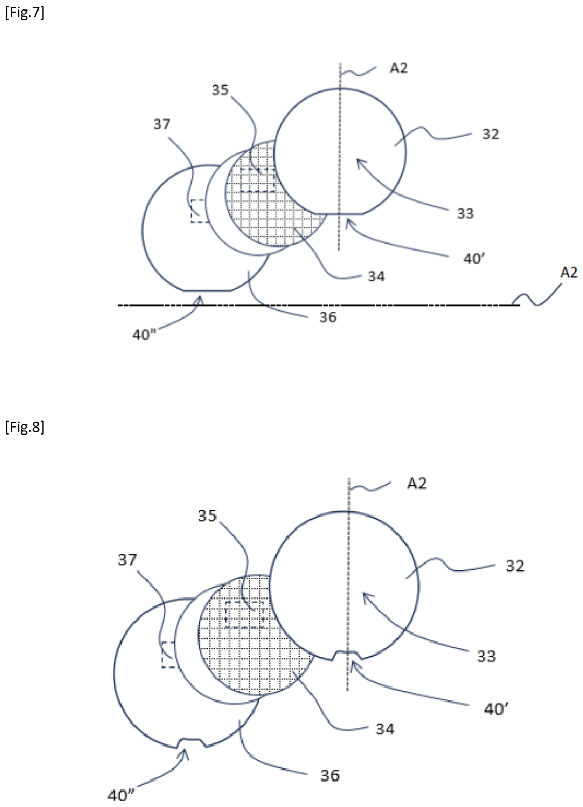

Dans ce mode de réalisation et tel que représenté en figure 7, seules la couche avant 32 et la couche arrière 36 sont munies d'une troncature initiale 40', 40" sous forme de méplat. La couche intermédiaire 34 s'inscrit dans un cercle de diamètre inférieur à celui des formes extérieures des couches avant et arrière et conserve une forme extérieure circulaire.

Pour permettre cette troncature sans pénaliser la fabrication du module photovoltaïque, il est éventuellement nécessaire d'augmenter la largeur du bord d'étanchéité 39 par rapport à une conception sans troncature.

De préférence, la hauteur du segment circulaire a une hauteur minimum, par exemple supérieure à 1mm, permettant d'assurer le blocage en rotation du module photovoltaïque 30 dans le dispositif de commande manuelle 10 en limitant sensiblement les risques de glissement.

Selon un deuxième exemple de réalisation représenté à la figure 8, la troncature 40 est matérialisée par une encoche formée dans le bord d'étanchéité 39 du module photovoltaïque 30. Les bords de cette encoche peuvent être arrondis ou droits. L'encoche peut par exemple être délimitée par un arc de cercle. Les encoches sont telles que l'étanchéité assurée par le bord d'étanchéité 39 est néanmoins conservée.

Ainsi, la troncature 40 du module photovoltaïque 30 est réalisée par retrait d'une forme équivalente à l'encoche par rapport la forme extérieure généralement circulaire du panneau, autrement dit dans le disque matérialisant le module photovoltaïque 30. La troncature est avantageusement réalisée lors de la fabrication de chacune des couches du module photovoltaïque 30.

Comme dans le premier exemple de réalisation, chacune des couches avant et arrière du module photovoltaïque 30 est prévue sous forme de disque correspondant à la forme de la zone centrale 12, muni d'une troncature initiale 40', 40" qui s'inscrit dans un segment ou un secteur circulaire de ce disque, tandis que la couche intermédiaire 34 s'inscrit dans un cercle de circonférence inférieure au périmètre des couches avant et arrière et conserve une forme de disque plein.

L'assemblage des couches indexées les unes par rapport aux autres permet de former la troncature du module photovoltaïque 30 sous forme d'encoche. Cette troncature permet de caler l'orientation angulaire du module photovoltaïque 30 par rapport à la plateforme 50 du dispositif de commande manuelle 10, celle-ci comprenant une surépaisseur locale alors réalisée avec des formes et dimensions similaires et complémentaires à celles de la troncature du module photovoltaïque.

La zone interne 14 ainsi réalisée permet également la mise en place d'un dispositif lumineux, comme décrit précédemment.

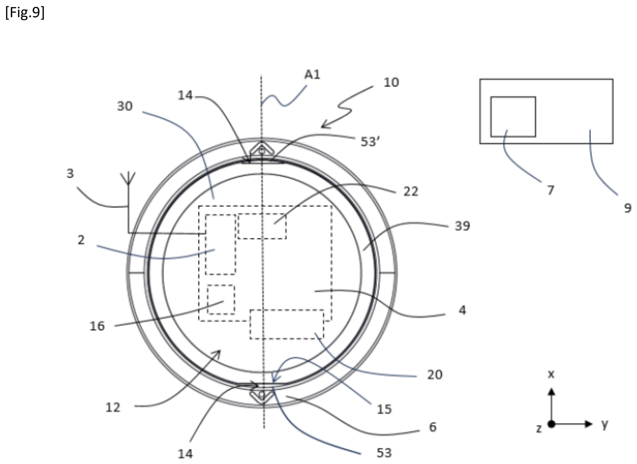

Le dispositif de commande manuelle 10 représenté sur la figure 9 montre une variante du mode de réalisation des figures 6 à 8. Dans cette variante, le rebord 52 périphérique de la plateforme 50 comprend une deuxième surépaisseur 53', située à l'opposé de la surépaisseur 53 locale. La surépaisseur 53 locale des modes de réalisation précédents et la deuxième surépaisseur 52' locale sont disposées symétriquement par rapport au centre C du dispositif manuel de commande 10.

Le dispositif de commande manuelle 10 présente ainsi deux zones internes 14.

Dans le cas où chacune des zones internes est munie d'un dispositif lumineux, il est possible de faire en sorte d'émettre un signal lumineux au niveau d'une zone interne 14 dès que le bouton de commande 6 à proximité de la zone interne 14 est activé.

Dans le cas d'un dispositif de commande disposant de plusieurs boutons de commande 6, il est ainsi possible de fournir un retour d'information lumineux à un utilisateur dès qu'il active un des boutons.

Alternativement, un signal lumineux peut être émis de manière intermittente, au niveau de l'une des zones internes, pour indiquer à un utilisateur que l'ordre de commande, émis par l'activation du bouton de commande 6 correspondant, est en cours de réalisation, ou a bien été exécuté.

Dans un exemple avantageux, la ou les cellules solaires sont semi-transparentes. Elles sont par exemple du type cellules solaires organiques ou OPV (Organic PhotoVoltaic).

Dans un exemple de réalisation, d'autres indicateurs lumineux, tels qu'un ou plusieurs écrans ou une ou plusieurs diodes électroluminescentes ou LEDs peuvent être positionnés à l'arrière de la cellule solaire pour fournir un retour d'information lumineux à un utilisateur, en utilisant les propriétés de semi-transparence de la cellule solaire organique.

La surépaisseurs 53 locale et la deuxième surépaisseur 53' peuvent avoir des dimensions similaires, tel que représenté sur la figure 9. Toutefois, il est également possible de prévoir des dimensions différentes, par exemple pour permettre un détrompage à l'installation du module photovoltaïque 30 sur la plateforme 50 lors de l'assemblage du dispositif de commande 10, ou pour mettre en place différentes interfaces homme-machine dans chacune des zones internes.

Les modes de réalisation présentés ci-dessus peuvent être combinés.

### REFERENCES

- C: centre
- 2: unité radiofréquences
- 3: antenne
- 4: unité électronique
- 6: bouton de commande
- 7: récepteur
- 9: charge électrique commandable
- 10: dispositif de commande manuelle
- 11: socle
- 12: zone centrale
- 14: zone interne
- 16: capteur
- 18: interface active
- 20: réserve d'énergie
- 22: zone de connexion
- 24, 24': interrupteur
- 26: élément de rappel
- 28: autre interrupteur
- 30: module photovoltaïque
- 32: couche avant
- 33: marquage
- 34: couche intermédiaire
- 35: électrodes
- 36: couche arrière
- 37: liaisons électriques
- 39: bord d'étanchéité
- 40: troncature
- 40': troncature initiale couche avant
- 40": troncature initiale couche arrière
- 40‴: troncature initiale couche intermédiaire
- 50: plateforme
- 51: surface de support
- 52: rebord (périphérique)
- 53: surépaisseur (locale)
- 53': deuxième surépaisseur
- 54: patte de montage
- 55: évidement connectique
- 56: lumière
- 62: diode électroluminescente
- 64: guide lumineux
- 65: entrée du guide lumineux
- 66: sortie du guide lumineux
- 70: Interface homme-machine
- 78: Antenne

## Revendications

1. Dispositif de commande manuelle (10), le dispositif de commande manuelle (10) comprenant : un socle (11), un bouton de commande (6) monté sur le socle (11) et permettant l'application manuelle d'un effort d'appui par l'utilisateur du dispositif de commande manuelle (10) pour provoquer l'émission d'un ordre de commande, le dispositif de commande manuelle (10) comprenant également une unité électronique (4) comprenant un transmetteur d'ordres de commande et une réserve d'énergie (20), le dispositif de commande manuelle (10) comprenant une zone centrale (12) circulaire délimitée au moins en partie par le bouton de commande (6), **caractérisé en ce qu'**il comprend un module photovoltaïque (30) alimentant la réserve d'énergie (20) et une plateforme (50) du module photovoltaïque (30), montée sur le socle (11), la plateforme comprenant une surface de support (51) délimitée par un rebord (52) périphérique comprenant une surépaisseur (53) locale , le module photovoltaïque (30) présentant une forme sensiblement circulaire, le module photovoltaïque (30) étant logé sur la surface de support (51) de la plateforme (50) et à l'intérieur du rebord (52) périphérique et maintenu en rotation par la surépaisseur (53) locale du rebord (52) périphérique.

2. Dispositif de commande manuelle (10) selon la revendication précédente, **caractérisé en ce qu'**il comprend une interface homme-machine (70) positionnée au niveau de la surépaisseur (53) locale du rebord périphérique (52).

3. Dispositif de commande manuelle (10) selon la revendication précédente, **caractérisé en ce que** l'interface homme-machine comprend une diode électroluminescente (62) et un guide de lumière (64) dont une entrée (65) est positionnée en vis-à-vis de la diode électroluminescente (62) et dont une sortie (66) est, en configuration assemblée du dispositif de commande manuelle (10), agencées en vis-à-vis de surépaisseur (53) locale, en particulier agencée en vis-à-vis d'une lumière (56) prévue dans la surépaisseur (53) locale.

4. Dispositif de commande manuelle (10) selon l'une des revendications 2 ou 3, **caractérisé en ce que** l'interface homme-machine (70) comprend un interrupteur bistable ou un bouton poussoir ou un capteur, en particulier agencé en vis-à-vis d'un évidement prévu dans la surépaisseur (53) locale.

5. Dispositif de commande manuelle (10) selon l'une des revendications précédentes, **caractérisé en ce qu'**il comprend une antenne disposée au moins en partie en vis-à-vis de la surépaisseur (53) locale.

6. Dispositif de commande manuelle (10) selon l'une des revendications précédentes, **caractérisé en ce que** le circuit électronique comprend un circuit imprimé positionné sur le socle (11) et sous la plateforme (50) et **en ce que** le circuit imprimé supporte au moins une diode électroluminescente (62), un guide de lumière (64), un interrupteur ou une antenne, en vis-à-vis de la surépaisseur (53) locale en configuration assemblée du dispositif de commande manuelle (10).

7. Dispositif de commande manuelle (10) selon l'une des revendications précédentes, **caractérisé en ce que** la forme de la surépaisseur (53) locale s'inscrit dans un segment ou secteur circulaire de la zone centrale (12).

8. Dispositif de commande manuelle (10) selon l'une des revendications précédentes, **caractérisé en ce que** le module photovoltaïque (30) a une forme principale de disque et présente une superposition de couches laminées comprenant au moins une couche avant (32), une couche intermédiaire (34) intégrant au moins une cellule photovoltaïque active et une couche arrière (36) disposant de liaisons électriques (37) adaptées au raccordement du module photovoltaïque (30) à l'unité électronique du dispositif de commande manuelle (10), au moins les couches avant et arrière étant reliées l'une à l'autre, le module photovoltaïque présentant une troncature (40) s'inscrivant dans un segment ou secteur circulaire de la forme de disque.

9. Dispositif de commande manuelle (10) selon la revendications précédente, **caractérisée en ce que** la couche avant (32) et la couche arrière (36) du module photovoltaïque (30) sont des films en matériau plastique, encapsulant la couche intermédiaire (34) intégrant les cellules photovoltaïques actives et assurant l'étanchéité de ces cellules photovoltaïques actives.

10. Dispositif de commande manuelle (10) selon la revendication précédente, **caractérisé en ce que** la troncature (40) et la surépaisseur (53) locale ont des formes complémentaires et sont en vis-à-vis dans une configuration assemblée du dispositif de commande manuelle (10).

11. Dispositif de commande manuelle (10) selon l'une des revendications précédentes, **caractérisé en ce qu'**il comporte un interrupteur sous la plateforme et **en ce que** la surface de support de la plateforme (50), ainsi que le module photovoltaïque sont déformables élastiquement de sorte à permettre l'actionnement de l'interrupteur à travers le module photovoltaïque.

12. Dispositif de commande manuelle (10) selon l'une des revendications précédentes, **caractérisé en ce que** la plateforme (50) comprend une ouverture(55) faisant face aux liaisons électriques (37) du module photovoltaïque (30).

13. Dispositif de commande manuelle (10) selon l'une des revendications précédentes, **caractérisé en ce que** le rebord (52) périphérique et la surépaisseur (53) locale ont une hauteur sensiblement égale à l'épaisseur du module photovoltaïque (30).

14. Dispositif de commande manuelle (10) selon l'une des revendications précédentes, **caractérisé en ce que** rebord (52) périphérique comprend une deuxième surépaisseur (53'), située à l'opposé de la surépaisseur (53) locale, la surépaisseur (53) locale et la deuxième surépaisseur (52') locale étant disposées symétriquement par rapport au centre (C) du dispositif manuel de commande (10).

15. Dispositif de commande selon l'une des revendications 1 à 14, comportant un interrupteur bistable actionnable par déformation du module photovoltaïque.
